## Europäisches Patentamt

(19) **European Patent Office**

**Office européen des brevets**

(11) Veröffentlichungsnummer: **0 054 879**
**B1**

(12) # EUROPÄISCHE PATENTSCHRIFT

(45) Veröffentlichungstag der Patentschrift:
**10.04.85**

(51) Int. Cl.⁴: **B 62 D 55/20, F 16 G 15/02**

(21) Anmeldenummer: **81110417.3**

(22) Anmeldetag: **14.12.81**

(54) **Verbindungsglied für eine endlose Raupenkette.**

(30) Priorität: **24.12.80 US 219625**

(43) Veröffentlichungstag der Anmeldung:
**30.06.82 Patentblatt 82/26**

(45) Bekanntmachung des Hinweises auf die Patenterteilung:
**10.04.85 Patentblatt 85/15**

(84) Benannte Vertragsstaaten:
**DE FR GB IT**

(56) Entgegenhaltungen:
**DE - A - 2 038 144**
**DE - A - 2 844 107**
**DE - A - 3 021 325**
**DE - B - 2 400 481**
**US - A - 3 427 079**

(73) Patentinhaber: **DEERE & COMPANY, 1 John Deere Road, Moline Illinois 61265 (US)**

(72) Erfinder: **Bedis, Michael, 3135 St. Anne Drive, Dubuque Iowa 52001 (US)**
Erfinder: **Westemeier, Donald Edmund, 400 Summer Drive, Dubuque Iowa 52001 (US)**

(74) Vertreter: **Gramm, Werner, Prof. Dipl.-Ing., Patentanwälte Gramm + Lins Theodor-Heuss-Strasse 2, D-3300 Braunschweig (DE)**

ACTORUM AG

## Beschreibung

Die Erfindung betrifft ein Verbindungsglied für eine endlose Raupenkette, mit je einer Verbindungsbohrung an den sich gegenüberliegenden Gliedenden, mit einer Aussenfläche zur Befestigung eines Raupenkettenschuhs und einer gegenüberliegenden Innenfläche, sowie mit einem ersten und zweiten Gliedteil, die miteinander lösbar verbunden sind und sich in einem zwischen den beiden Verbindungsbohrungen liegenden Bereich überlappen, der einen mittig zwischen diesen Verbindungsbohrungen liegenden gezahnten, die beiden Gliedteile gegenseitig im Eingriff haltenden Abschnitt aufweist, der in je eine sich zur Innenfläche bzw. Aussenfläche erstrekkende Trennfuge übergeht, in der die beiden Gliedteile mit je einer inneren Anlagefläche bzw. einer äusseren Anlagefläche aneinander anliegen.

Es müssen Mittel vorgesehen werden, um z.B. bei einem Raupenschlepper o.dgl. die Raupenkette abnehmen zu können. Sind die Verbindungen zwischen den Raupenkettengliedern abgedichtet und geschmiert, muss das Verbindungsglied geteilt sein, um die Abdichtung an den Verbindungstellen beim Trennen der Raupenkette nicht zu beeinträchtigen.

Ein Verbindungsglied der eingangs erläuterten Bauform lässt sich der US-Patentschrift 3 427 079 entnehmen. Die beiden Gliedteile sind über Kopfbolzen gegeneinander verspannt und liegen über die gesamte Länge der beiden sich an den gezahnten mittleren Abschnitt anschliessenden Trennfugen mit ihren inneren und äusseren Anlageflächen plan aneinander an. Die äussere Trennfuge verläuft etwa parallel zur inneren Trennfuge und ist dieser gegenüber lediglich um die Breite des ebenfalls schräg verlaufenden gezahnten Abschnittes versetzt.

Durch das Zusammenschrauben der beiden Gliedteile erfolgt ein Vorspannen bzw. eine Vorbelastung in hinsichtlich der Dauerfestigkeit kritischen Bereichen am Übergang zwischen dem gezahnten Abschnitt und den beiden sich hieran anschliessenden flachen Anlagebereichen. In diesen kritischen Übergangsbereichen ergeben sich bei der vorbekannten Ausführungsform während des Arbeitseinsatzes hohe zyklische Spannungen, so dass die bekannten Verbindungsglieder nur eine verhältnismässig geringe Dauerfestigkeit aufweisen.

Der Erfindung liegt somit die Aufgabe zugrunde, das eingangs erläuterte Verbindungsglied hinsichtlich seiner Dauerfestigkeit zu verbessern.

Diese Aufgabe wird gemäss der Erfindung dadurch gelöst, dass in einem ersten, sich jeweils unmittelbar an den gezahnten Abschnitt anschliessenden Trennfugenabschnitt ein lichter Abstand zwischen den inneren Anlageflächen sowie ein lichter Abstand zwischen den äusseren Anlageflächen vorgesehen ist, so dass sich die beiden Gliedteile nur in einem im Abstand von dem gezahnten Abschnitt nach innen bzw. aussen entfernt liegenden Anlagebereich aneinander abstützen.

Dabei ist es vorteilhaft, wenn die Länge des ersten, den lichten Abstand aufweisenden Trennfugenabschnitts etwa ³/4 der Gesamtlänge der inneren bzw. äusseren Trennfuge entspricht.

Bei der erfindungsgemässen Ausführungsform liegen somit die sich beim Verschrauben der beiden Gliedteile ergebenden Klemmbereiche, in denen die beiden Gliedteile aneinander anliegen, von den kritischen Übergangsbereichen zwischen dem gezahnten Abschnitt und den sich hieran anschliessenden Trennfugen am weitesten weg. Es hat sich in der Praxis überraschend gezeigt, dass sich durch die geänderte Konstruktion eine erhebliche Verbesserung der Dauerfestigkeit des Verbindungsgliedes erreichen lässt.

Weitere Merkmale der Erfindung sind Gegenstand der Unteransprüche und werden zusammen mit weiteren Vorteilen der Erfindung anhand zweier Ausführungsbeispiele näher erläutert.

In der Zeichnung sind zwei als Beispiele dienende Ausführungsformen der Erfindung dargestellt. Es zeigen:

Figur 1 ein Verbindungsglied in Draufsicht;
Figur 2 das Verbindungsglied gemäss Figur 1 in Seitenansicht und
Figur 3 eine abgewandelte Ausführungsform in einer Darstellung gemäss Figur 2.

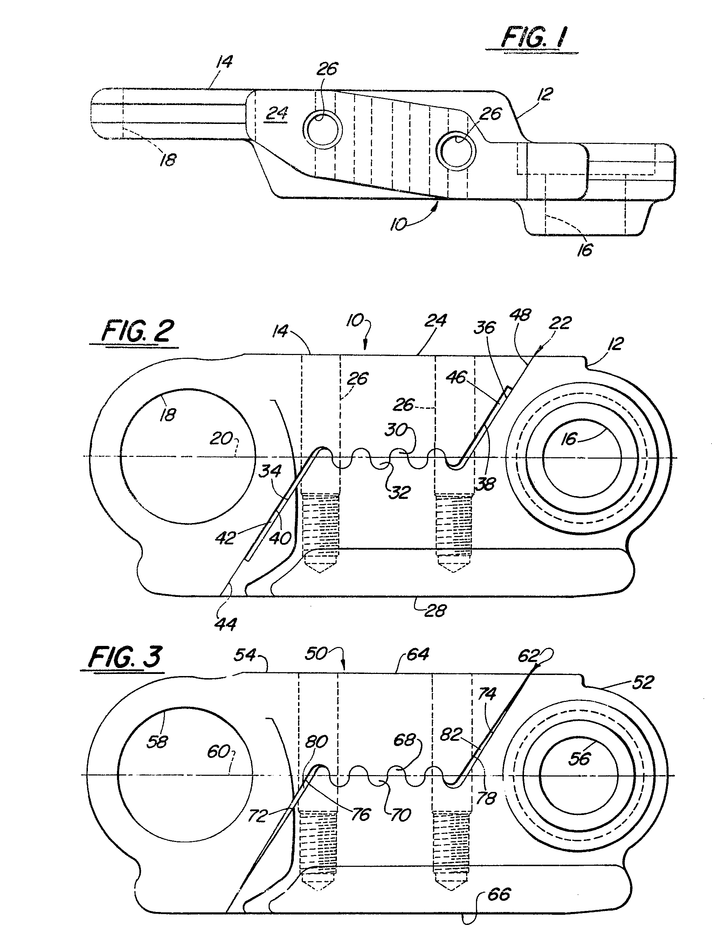

Das in den Figuren 1 und 2 dargestellte Verbindungsglied 10 für eine endlose Raupenkette besteht aus einem ersten Gliedteil 12 und einem zweiten Gliedteil 14, die in ihren sich gegenüberliegenden Enden eine Stiftbohrung 16 und eine Buchsenbohrung 18 aufweisen, deren Mittelpunkte über eine Linie 20 miteinander verbunden sind. Zwischen den beiden Verbindungsbohrungen 16, 18 weisen die beiden Gliedteile 12, 14 einen Überlappungsbereich auf, dessen Trennfläche mit 22 bezeichnet ist. Das Verbindungsglied 10 umfasst eine Aussenfläche 24 zur Befestigung eines Raupenkettenschuhs, der über Kopfschrauben befestigt werden kann, die sich durch den Raupenkettenschuh hindurch erstrecken und in Verbindungsbohrungen 26 eingeschraubt werden, die sich durch das Gliedteil 14 nach unten bis in das Gliedteil 12 erstrecken. Der Aussenfläche 24 gegenüber liegt eine Innenfläche 28, die Teil einer Schiene ist, die in Raupenkettenräder eingreift.

Die genannte Trennfläche 22 wird durch sich gegenüberliegende Flächen der beiden Gliedteile 12, 14 gebildet. Das erste Gliedteil 12 weist einen gezahnten Abschnitt 30 auf, der etwa mittig zwischen den Verbindungsbohrungen 16, 18 auf deren Verbindungslinie 20 liegt. Im Eingriff mit diesem gezahnten Abschnitt 30 steht ein entsprechend ausgebildeter gezahnter Abschnitt 32 des zweiten Gliedteils 14. Diese beiden gezahnten Abschnitte 30, 32 erstrecken sich über etwa ¹/3 der Entfernung zwischen den beiden Mittelpunkten der Verbindungsbohrungen 16, 20. Der gezahnte Abschnitt 30 des ersten Gliedteils 12 geht an seinem linken Ende (siehe Figur 2) in eine abgesetzte innere Anlagefläche 34 und an seinem rechten Ende in eine plane äussere Anlagefläche 36 über, während bei dem zweiten Gliedteil 14 der gezahnte Abschnitt 32 an seinem linken Ende in eine plane innere Anlagefläche 40 und an seinem rechten Ende in eine abgesetzte äussere Anlagefläche 38 übergeht. Dadurch bilden die abgesetzte Innenfläche 34 mit der ihr zugeordneten planen inneren Anlagefläche 40 einen lichten Abstand 42 und die abgesetzte äussere Anlagefläche 38 mit der zugeordneten planen äusseren Anlagefläche 36 einen lichten Abstand 46. Die Länge des sich von dem gezahnten Abschnitt 30, 32 zur Innenfläche 28 bzw. Aussenfläche 24 erstreckenden, den genannten lichten Abstand aufweisenden Trennfugenabschnitts beträgt etwa 3/4 der gesamten Länge der planen Anlagefläche 40 bzw. 36. Die plane innere Anlagefläche 40 liegt somit nur mit einem Viertel ihrer Länge neben der Innenfläche 28 an der abgesetzten Anlagefläche 34 an und bildet hier einen Anlage- bzw. Klemmbereich 44. Der entsprechende Anlage- bzw. Klemmbereich zwischen den beiden äusseren Anlageflächen 36, 38 ist mit 48 bezeichnet.

Werden Kopfschrauben in die Bohrungen 26 eingeschraubt, werden die beiden Anlage- bzw. Klemmbereiche 44, 48 zusammengepresst, um so eine Vorbelastung oder Vorspannung in den kritischen Bereichen zwischen dem gezahnten Abschnitt 30 und der Anlagefläche 36 bzw. zwischen dem gezahnten Abschnitt 32 und der Anlagefläche 40 zu erzielen. Wegen des verhältnismässig grossen Abstandes zwischen den Anlagebereichen 44, 48 und dem vorstehend genannten kritischen Bereich ist die Vorspannung in diesen beiden kritischen Bereichen etwa viermal grösser als bei den eingangs erläuterten vorbekannten Verbindungsgliedern. Es wurde festgestellt, dass bei den erfindungsgemässen Verbindungsgliedern mit der wesentlich höheren Vorspannung bei einer vorgegebenen Betriebsbelastung der Bereich der in den kritischen Bereichen auftretenden zyklischen Spannungen um mehr als 1/4 gegenüber dem bei den vorbekannten Verbindungsgliedern auftretenden Bereich verringert ist. Es kann somit festgestellt werden, dass die durch die lichten Abstände 42, 46 geschaffenen Entlastungsbereiche die zyklische Belastung in den kritischen Bereichen beim Übergang zwischen dem gezahnten Abschnitt 30, 32 und den sich anschliessenden Trennfugen nennenswert verringert werden kann.

Figur 3 zeigt eine abgewandelte Ausführungsform. Das hier dargestellte Verbindungsglied 50 umfasst ein erstes Gliedteil 52 und ein zweites Gliedteil 54, die an sich gegenüberliegenden Enden eine Stiftbohrung 56 sowie eine Buchsenbohrung 58 aufweisen, deren Mittelpunkte über eine Linie 60 miteinander verbunden sind. Beide Gliedteile 52, 54 weisen zwischen den Verbindungsbohrungen 56, 58 einen Überlappungsbereich auf, dessen Trennfläche mit dem Bezugszeichen 62 gekennzeichnet ist. Das Verbindungsglied 50 umfasst eine Aussenfläche 64 zur Befestigung eines Raupenkettenschuhs sowie eine gegenüberliegende Innenfläche 66.

Die Trennfläche 62 zwischen den beiden Gliedteilen 52, 54 wird gebildet durch gezahnte Abschnitte 68, 70, die wiederum mittig zwischen den Verbindungsbohrungen 56, 58 auf deren Verbindungslinie liegen. Der gezahnte Abschnitt 68 des ersten Gliedteils 52 geht an seinem linken Ende in eine plan ausgebildete innere Anlagefläche 76 und an seinem rechten Ende in eine ebenfalls plan ausgebildete äussere Anlagefläche 74 über, während der gezahnte Abschnitt 70 des zweiten Gliedteils 54 in entsprechende innere und äussere Anlageflächen 76, 78 übergeht. Die beiden inneren Anlageflächen 72, 76 sowie die beiden äusseren Anlageflächen 74, 78 laufen jeweils spitzwinklig zur Innenfläche 66 bzw. Aussenfläche 64 zu und liegen somit lediglich im äusseren Endbereich aneinander an, während sie in dem inneren, sich jeweils an den gezahnten Abschnitt 68, 70 anschliessenden Trennfugenabschnitt einen lichten Abstand 80 bzw. 82 aufweisen, der Entlastungsbereiche bildet, deren Funktion denen der Ausführungsform gemäss Figur 2 entspricht.

**Patentansprüche**

1. Verbindungsglied (10; 50) für eine endlose Raupenkette, mit je einer Verbindungsbohrung (16, 18; 56, 58) an den sich gegenüberliegenden Gliedenden, mit einer Aussenfläche (24; 64) zur Befestigung eines Raupenkettenschuhs und einer gegenüberliegenden Innenfläche (28; 66), sowie mit einem ersten (12; 52) und zweiten (14; 54) Gliedteil, die miteinander lösbar verbunden sind und sich in einem zwischen den beiden Verbindungsbohrungen liegenden Bereich überlappen, der einen mittig zwischen diesen Verbindungsbohrungen liegenden gezahnten, die beiden Gliedteile (12, 14; 52 54) gegenseitig im Eingriff haltenden Abschnitt (30, 32; 68, 70) aufweist, der in je eine sich zur Innenfläche (28; 66) bzw. Aussenfläche (24; 64) erstreckende Trennfuge übergeht, in der die beiden Gliedteile (12, 14; 52, 54) mit je einer inneren Anlagefläche (34, 40; 72, 76) bzw. einer äusseren Anlagefläche (36, 38; 74, 78) aneinander anliegen, dadurch gekennzeichnet, dass in einem ersten, sich jeweils unmittelbar an den gezahnten Abschnitt (30, 32; 68, 70) anschliessenden Trennfugenabschnitt ein lichter Abstand (42; 80) zwischen den inneren Anlageflächen (34, 40; 72, 76) sowie ein lichter Abstand (46; 82) zwischen den äusseren Anlageflächen (36, 38; 74, 78) vorgesehen ist, so dass sich die beiden Gliedteile (12, 14; 52, 54) nur in einem im Abstand von dem gezahnten Abschnitt nach innen bzw. aussen entfernt liegenden Anlagebereich (44, 48) aneinander abstützen.

2. Verbindungsglied nach Anspruch 1, dadurch gekennzeichnet, dass die Länge des ersten, den lichten Abstand (42, 46) aufweisenden Trennfugenabschnitts etwa 3/4 der Gesamtlänge der inneren bzw. äusseren Trennfuge entspricht.

3. Verbindungsglied nach Anspruch 1 oder 2, dadurch gekennzeichnet, dass zur Bildung des lichten Abstandes (42, 46) die innere Anlagefläche (34) des ersten Gliedteils (12) sowie die äussere Anlagefläche (38) des zweiten Gliedteils (14) so abgesetzt sind, dass sie in diesem Bereich parallel zur zugeordneten Anlagefläche (40 bzw. 36) des anderen Gliedteils liegen.

4. Verbindungsglied nach Anspruch 1 oder 2, dadurch gekennzeichnet, dass die inneren und äusseren Anlageflächen (72, 76; 74, 78) jeweils plan ausgebildet sind und spitzwinklig zur Innenfläche (66) bzw. Aussenfläche (64) zulaufen.

5. Verbindungsglied nach einem der vorhergehenden Ansprüche, dadurch gekennzeichnet, dass der gezahnte Abschnitt (30, 32; 68, 70) auf der Verbindungslinie (20; 60) zwischen den Mittelpunkten der beiden Verbindungsbohrungen (16, 18; 56, 58) liegt.

**Revendications**

1. Maille de jonction ou de raccordement (10; 50) pour chaîne sans fin de chenille, comportant chaque fois un perçage de jonction (16, 18; 56, 58) aux extrémités opposées de la maille, une surface extérieure (24; 64) pour la fixation d'une plaque de chenille et une surface intérieure opposée (28; 66), ainsi qu'une première et une seconde parties de maille (12; 52; 14; 54) qui sont reliées amoviblement ensemble et qui se chevauchent dans une zone située entre les deux perçages de jonction, cette zone présentant un tronçon denté (30, 32; 68, 70) situé au milieu entre ces deux perçages et maintenant les deux parties de maille (12, 14; 52, 54) en prise l'une avec l'autre, ce tronçon se prolongeant par un joint de séparation s'étendant chaque fois jusqu'à la surface intérieure (28; 66) ou la surface extérieure (24; 64) et au niveau duquel les deux parties de maille (12, 14; 52, 54) s'appliquent l'une contre l'autre chaque fois par une surface d'application intérieure (34, 40; 72, 76) ou par une surface d'application extérieure (36, 38; 74, 78), caractérisée en ce qu'il est prévu, dans un premier tronçon du joint de séparation se raccordant chaque fois directement au tronçon denté (30, 32; 68, 70) un intervalle (42; 80) entre les surfaces d'application intérieure (34, 40; 72, 76), ainsi qu'un intervalle (46; 82) entre les surfaces d'application extérieures (36, 38; 74, 78), de sorte que les deux parties de maille (12, 14; 52, 54) ne prennent appui l'une sur l'autre que dans une zone d'application (44, 48) écartée du tronçon denté vers l'intérieur ou vers l'extérieur.

2. Maille de jonction suivant la revendication 1, caractérisée en ce que la longueur du premier tronçon du joint de séparation présentant l'intervalle (42, 46) correspond aux trois-quarts environ de la longueur totale du joint de séparation intérieur ou extérieur.

3. Maille de jonction suivant la revendication 1 ou 2, caractérisée en ce que, pour la formation de l'intervalle (42, 46) la surface d'application intérieure (34) de la première partie de maille (12) ainsi que la surface d'application extérieure (38) de la seconde partie de maille (14) présentent un gradin tel qu'elles soient, dans cette zone, parallèles à la surface d'application conjuguée (40, 36) de l'autre partie de maille.

4. Maille de jonction suivant la revendication 1 ou 2, caractérisée en ce que les surfaces d'application intérieures et extérieures (72, 76; 74, 78) ont chaque fois une forme plane et convergent en formant entre elles un angle aigu vers la surface intérieure (66) ou vers la surface extérieure (64).

5. Maille de jonction suivant l'une quelconque des revendications précédentes, caractérisée en ce que le tronçon denté (30, 32; 68, 70) se trouve sur la ligne (20; 60) reliant les centres des deux perçages de jonction (16, 18; 56, 58).

**Claims**

1. A connecting link (10; 50) for an endless track chain, comprising connecting bores (16, 18; 56, 58) respectively located in opposite ends thereof and having an outer side (24; 64) for fastening a track shoe and an opposite inner side (28; 66); said link including a first (12; 52) and second (14; 54) link section being releasably connected with each other and having an overlapping portion located between said two connecting bores; said overlapping portion including a tooth rack portion (30, 32; 68, 70) located centrally between said connecting bores keeping said first and second link sections (12, 14; 52, 54) intermeshed with each other; said tooth rack portion passing over into a parting line, respectively extending to said inner (28; 66) and outer side (24; 64); each link section (12, 14; 52, 54) abutting with an inner (34, 40; 72, 76) and an outer (36, 38; 74, 78) confronting surface, respectively, against each other in said parting line, characterized in that in a first parting line section, following directly to the tooth rack portion (30, 32; 68, 70), a relief area (42; 80) is provided between said inner confronting surfaces (34, 40; 72, 76) as well as a relief area (46; 82) between said outer confronting surfaces (36, 38; 74, 78) so that the two link sections (12, 14; 52, 54) support each other only in a bearing area (44, 48) spaced outwardly and inwardly from the tooth rack portion.

2. A connecting link according to claim 1, wherein the length of said first parting line section including said relief area (42, 46) is about three-fourths of the total length of the inner or outer parting line, respectively.

3. A connecting link according to claim 1 or 2, wherein for forming the relief area (42, 46) the inner confronting surface (34) of the first link section (12) as well as the outer sonfronting surface (38) of the second link section (14) are stepped so that they are in this area parallel to the corresponding confronting surface (40 and 36, respectively) of the other link section.

4. A connecting link according to claim 1 or 2, wherein the inner and outer confronting surfaces (72, 76; 74, 78), respectively, are planar and extend in an acute angle to the inner side (66) and outside (64), respectively.

5. A connecting link according to one of the preceding claims, wherein the tooth rack portion (30, 32; 68, 70) is located on the connecting line (20; 60) between the centers of the two connecting bores (16, 18; 56, 58).

FIG. 1

FIG. 2

FIG. 3